# EUROPEAN PATENT SPECIFICATION

(11) **EP 0 620 380 B1**
(45) Date of publication and mention of the grant of the patent: **19.02.1997**
(21) Application number: 93106068.5
(22) Date of filing: 14.04.1993
(51) Int. Cl.: F16F 15/16, B21D 22/16

(54) **A torsional vibration damper and a method for manufacturing the same**
Torsionschwingungsdämpfer und Methode zur Herstellung desselben
Amortisseur de vibrations en torsion et procédure pour la fabrication d'un tel

(43) Date of publication of application: 19.10.1994
(73) Proprietor: VIBRATECH, INC., Buffalo New York 14211 (US)
(72) Inventor: Critton, Thomas J., Oklahoma City, Oklahoma 73118 (US); Pukalo, Walter P., Cheektowaga, New York 14227 (US); Yorio, Ralph, East Amherst, New York 14051 (US); Johnson, Donald S., Fort Erie, Ontario L2A 1R3 (CA)
(74) Representative: Goddar, Heinz J., Dr.

(56) References cited:
- EP-A- 0 302 283
- WO-A-90/13758
- FR-A- 2 376 708
- US-A- 4 109 542
- US-A- 4 134 284

## Description

This invention relates to improvements in viscous torsional vibration dampers and is more particularly concerned with improving the reliability and lowering the cost of such dampers.

Viscous torsional vibration dampers of the kind to which the present invention is directed have heretofore been successfully produced with cast ferrous, forged ferrous, stamped, and welded housings all machined to provide the desired dimensions, providing an axially opening annular working chamber within which is housed a complementary annular inertia mass ring and with a cover sealed across the axial opening of the housing for confining the inertia ring within the annular working chamber therein. Opposed surfaces of the inertia ring and the housing are in shear film spaced relation having regard to a viscous damping fluid substantially filling those spaces. Cast, forged, and stamped and welded housings require much machining, and therefore present a substantial cost factor in the dampers.

A further proposal has been to finish shape the damper housings by hydroforming techniques. This necessitates rather wide tolerances and therefore unusually high viscosity damping fluid, unless the shear film gap surfaces are machined, consequently resulting in a costly construction. By way of example United States Patent No. 3,512,612 is referred to for a disclosure of the hydroforming proposal for such dampers.

The document US-A 3, 792, 683 discloses a housing of a torsional vibration damper. An annular inertia weight is rotatably mounted in a closed chamber and comprises an iron casting or other weighty material covered with a coating such as nylon, Teflon, bronze or the like. In order to avoid abrasion of this customary coating, the working chamber wall surfaces have to be machined in a separate operation. This problem is a general one and cannot be avoided with prior art dampers. Further, it may occur that because of those abrasion processes the damper is not dynamically balanced.

There are methods known to guarantee a dynamically balanced integral clutch housing by use of a roller spinning tool. This method, described in US-A 4, 056, 291, uses a roller to process the outer surfaces of the housing, so that rotational symmetry of the outer parts of the housing is obtained. However, this does not prevent from inhomogeneities occurring inside the damper, for instance by the above mentioned abrasion of the weight coating.

A finishing device for spinning work is disclosed in Japanese abstract Vol. 6, number 224 (M 170) [1102] November 9, 1982. The side face of a work piece to be finished is pressed to the circumference, while a roller is swung and moved in parallel to the rotary shaft direction of the mandrel.

U.S. Patent No. 4,872,369 discloses a tortional vibration damper according to the preamble of claim 8 and a method of making a tortional vibration damper according to the preamble of claim 1 and also according to the preamble of claim 5, contrary to the present invention defined by claim 1, claim 5 or claim 8, this document describes the roll spinning of the entire inside chamber walls 14, 15, 17 in a first step, and in a second step roll spinning outside surface of both the chamber base wall 14 and the annular outer axial wall 15 to form the chamber.

An important object of the present invention is to overcome the disadvantages and problems encountered in respect to prior viscous torsional vibration dampers and methods of making the same and to provide a new and improved damper of this type and method of making the same.

Another object of the present invention is to provide a new and improved torsional viscous vibration damper and method of producing the same wherein the damper housing is roll spun, with the advantages resulting from such formation of the damper housing. Still another object of the present invention is to provide a new and improved damper of the character indicated, resulting in substantial production and structural economies.

A further object of the present invention is to provide in such a damper a new and improved means for mounting the closure to the housing of the damper and for maintaining the integrity of the hermetic seal between the housing and the closure.

In accordance with the present invention there is provided in a viscous torsional vibration damper of the kind operating on the shear film principle and having an annular channel shaped housing providing an annular working chamber within which is mounted an annular complementary inertia mass ring and a viscous damping fluid substantially filling shear film spaces between working surfaces of the inertia ring and confronting working surfaces of the housing within the chamber, the housing comprising a roll spun generally channel shaped annular shell having a generally axially facing base wall and spaced axially extending radially inner and radially outer walls and which walls provide said housing working surfaces; annular radius corners joining said walls; and wherein only said housing working surfaces of the axially facing base wall and radially inner wall need have a spinning roll work hardened burnished finish. Only the radially outer wall of the annular shell need be spin rolled to complete the channel shape.

A further aim of the present invention is to provide a new and improved method of making torsional viscous vibration dampers having the new and improved construction aforesaid.

Other objects, features, and advantages of the present invention will be readily apparent from the following description of a preferred embodiment thereof, taken in conjunction with the accompanying drawings although variations and modifications may be effected without departing from the scope of the novel subject-matter according to the independent claims and embodied in the disclosure, and in which:

### ON THE DRAWINGS

Fig. 1 is a plan view of a viscous torsional vibration damper embodying the present invention;
Fig. 2 is a transverse sectional detail view taken substantially along the line II-II in Fig. 1;
Fig. 3 is a plan view of a blank for fabrication of the damper housing;
Fig. 4 is a fragmentary sectional elevational view demonstrating a step in the roll spinning of the damper housing;
Fig. 5 demonstrates a further step in the roll spinning of the housing;
Fig. 6 demonstrates the roll forming of a stepped shoulder for receiving the radially outer edge of the cover of the damper;
Fig. 7 is an exploded assembly view of the damper components;
Fig. 8 shows the damper components assembled and schematically illustrates the welding procedures; and
Fig. 9 demonstrates how the damper is filled with viscous damping fluid.

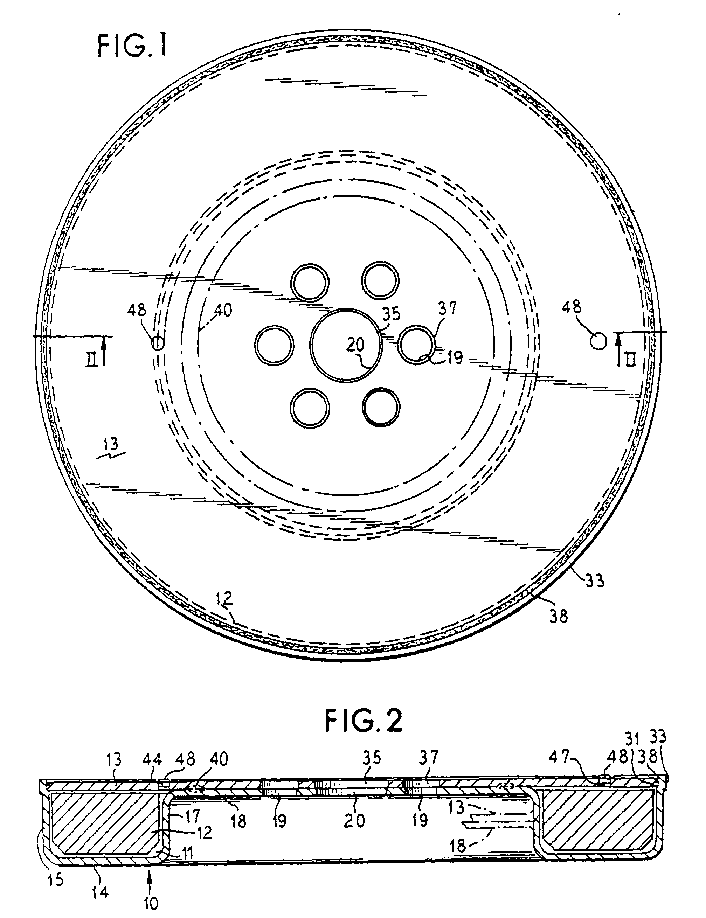

A typical viscous torsional vibration damper, sometimes referred to as a crankshaft damper, embodying the present invention, is depicted in Figs. 1 and 2. This damper comprises as its major components a one piece channel shaped housing 10 defining an annular working chamber 11, within which is housed a complementary inertia member ring 12, and with the axially open side of the housing closed by a closure 13 which is desirably in the form of a stamped or otherwise shaped plate.

Of particular importance is the construction of the housing 10 which is formed from a single piece of suitable gauge sheet metal such as about .03% aluminum in aluminum killed steel roll formed to shape to provide the channel shape for the working chamber 11 defined on one axial side by a radially extending base wall 14 which integrally joins a generally axially extending radially outer annular wall 15 and a generally axially extending radially inner wall 17 This inner wall 17, in turn, joins a radially inwardly extending and axially facing annular hub flange 18 which has an annular series of spaced bolt holes 19 to receive the bolts (not shown) by which the damper is attachable to or in association with a rotary member such as a crankshaft to be damped. A central opening 20 may receive a centering hub, or the like on the member to be damped.

Although, as shown in full line in Fig. 2, the closure 13 and the hub flange 18 may be located along one axial face of the damper, it may be desirable in some useful applications of the damper to have a different orientation of the hub area of the closure and the hub flange, as exemplified in dot-dash outline.

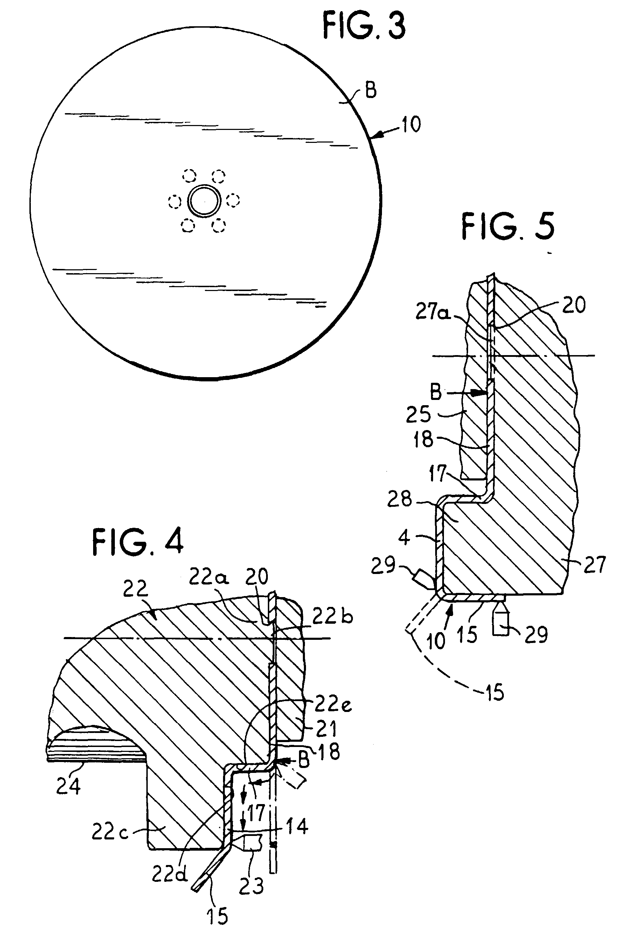

As demonstrated in Figs. 3-5, the housing 10 is shaped into a generally channel shaped shell by roll spinning to provide the working chamber channel 11. For this purpose, a circular disk blank B of the preferred material for roll spinning has prepunched therein the center locating opening 20.

For a first phase spinning of the blank B, as shown in Fig. 4, the blank may be attached as by means of a hydraulic clamp 21 to a spinning machine mandrel 22 having a raised cylindrical form 22a of the diameter to which the inner wall 17 of the housing is to be formed. A centering boss 22b fits in the center locating opening 20. The mandrel 22 also provides a collar 22c which forms with the form 22a an annular ledge having sides 22d, 22e approximately equal to the lengths of walls 14, 17 respectively. In the spinning machine an outer diameter portion of the blank B is spun by one or more spinning rollers 23 from the flat orientation shown in dot-dash outline in Fig. 4 to the formed orientation shown in full line along the ledge formed by sides 22d, 22e of the mandrel 22.

As the spinning roll 23 travels in its spinning function along the exposed surfaces of the axially spun portion of the blank B, the surfaces which will become the inner working surfaces of the housing walls 14 and 17 are work hardened and burnished to a finished surface so that no further machining is needed for those surfaces. In contrast, in prior torsional vibration damper housings the working chamber wall surfaces have had to be machined in a separate operation to avoid abrasion of the customary nylon coating carried by the inertia mass rings when in service the inertia ring 12 may be displaced from the ideal centered damping relation and tend to rub against a working chamber wall surface.

In comparison to United States Patent No. 4,872,369 issued October 10, 1989, corresponding to published European Patent Application No. 0 302 283 published 08.02.89, wherein the inner surface of the chamber walls 14, 15, 17 are first roll spun and then the outer surfaces of the chamber walls 14, 15 are roll spun, the present invention requires only the inner surfaces of select chamber walls 14, 17 to be roll spun and the outer surface of one chamber wall 15 to be roll spun to shape the housing 10. Per the present invention, the inner surface of the radially outer annular wall 15 need not be work hardened and burnished. The inertia member ring 12 can be relatively sized so it cannot contact the radially outer annular wall 15 because of first contacting the radially inner annular wall 17 on an opposite side of the housing 10, so work hardening and burnishing of the inside surface of the radially outer annular wall 15 can be eliminated. This results in a manufacturing advantage.

In the next stage of roll spinning of the housing 10 (Fig. 5), the partially spun blank B may be attached as by means of a hydraulic clamp 25 to a spinning mandrel 27 whereon the hub flange portion 18 is clamped to the mandrel 27 from the side opposite to the side that was attached to the mandrel 22. A centering boss 27a engages in the centering opening 20. In addition, the mandrel 27 has an annular forming backup rib 28 of a cross section corresponding to the cross sectional dimension desired for the inside of the working chamber channel 11 of the finished housing 10. After attachment of the blank B by means of the clamp 25, the wall 15 is spun by one or more spinning rolls 29 over and onto the shaping or forming rib 28 to attain the final U-shape for the channel 11 of the housing 10.

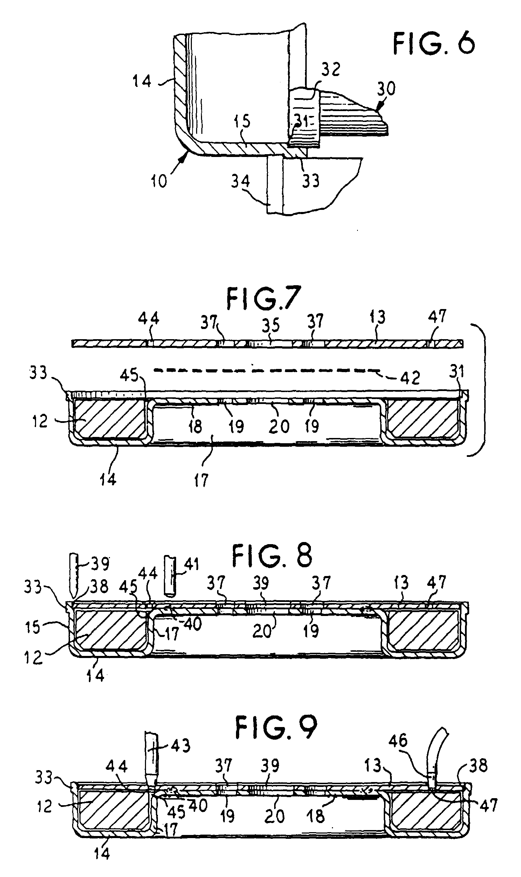

Finally, the housing member 10 is subjected to a set of forming rolls 30 (Fig. 6) in order to shape along the distal edge of the housing wall 15, a rabbet providing an annular axially outwardly facing shoulder seat 31 for the axially inner face at the radially outer edge of the closure 13. To this end, a set of forming rolls comprises a roll 32 which is designed to shape an annular radially outwardly offset rim flange 33 at the distal edge of the housing wall 15, in cooperation with a complementary shaping roll 34 which maintains the necessary stepped offset for providing the seat 31 while assuring integrity of the connection between the offset rim flange 33 and the body of the wall 15. As a result, the seat 31 maintains an accurate spacing of the closure 13 from the wall 14.

As demonstrated in the exploded illustrative schematic view in Fig. 7, assembly of the damper is effected by initially depositing the inertia mass ring 12 within the working chamber 11. It will be understood that the inertia ring member 12 will have been accurately machined and desirably provided with a bearing surface material such as nylon, as is common practice in this art to avoid seizure of contacting ferrous surfaces in the presence of silicone viscous damping fluid, which is a recognized phenomenon.

After the inertia ring member 12 has been assembled within the housing 10, the closure 13 is mounted in place. Prior to such mounting, the closure 13 is desirably prepunched with a centering hole 35 matching the centering hole 20 of the hub flange 18, and bolt holes 37 matching the bolt holes 19.

Permanent, hermetically sealed attachment of the closure 13 to the body shell 10 is preferably effected by means of laser welding. To this end, an annular laser weld 38 welds the radially outer edge of the closure 13 to the rim flange 33 adjacent to the seat 31. This may be effected by means of a welding head 39 as demonstrated in Fig. 8. In addition, an annular weld 40 may be effected by means of a laser welding head 41 hermetically sealing the closure 13 to the hub flange 18 adjacent to the wall 17. Such welding may be effected in any desired sequence or simultaneously, as may be preferred.

Alternative attachment of the closure 13 to the housing shell 10 may be by means a bonding agent such as a sealant disk 42 of structural adhesive generally matching the hub flange 18, as schematically shown in Fig. 7. The adhesive disk 42 may be fuse bonded to and between the closure 13 and the hub flange 18.

Other means for sealingly securing the closure 13 to the hub flange 18 may comprise a sealing ring interposed between these parts, and the closure 13 secured to the hub flange 18 by means such as spot welding.

After the closure 13 has been secured to the housing 10, filling of the chamber 11 with viscous hydraulic damping fluid such as a suitable viscosity silicone may be effected by means of a filling nozzle 43 through a filling hole 44 desirably aligned with reservoir space 45 adjacent to the inner wall 17. For assisting in filling, a vacuum nozzle 46 may be applied to an evacuation hole 47 desirably extending through the closure 13 diametrically opposite to the filling hole 44. After a full load of viscous damping fluid has been filled into the chamber 11, the nozzles 43 and 46 are removed and the holes 44 and 47 suitably sealed as by means of welded plugs 48 (Figs. 1 and 2).

## Claims

1. A method of making a viscous torsional vibration damper of the kind operating on the shear film principle and having an annular channel shaped housing (10) providing an annular working chamber (11) within which is mounted an annular complementary inertia mass ring (12) and a viscous damping fluid substantially filling shear film spaces between working surfaces of the inertia ring (12) and confronting working surfaces of the housing within said chamber, comprising roll (23) spinning a metal blank (B) into a generally channel shaped housing shell (11) and by said roll spinning providing an axially facing base wall (14) and spaced generally axially extending radially inner and radially outer walls (17, 15) and which walls provide said housing working surfaces;
characterized in that said roll spinning is carried out in two stages, wherein the first stage consists essentially of roll spinning the inner working surface of the base wall (14) and the inner working surface of the radially inner wall (17) and thereby forming a work hardened burnished finish thereon, and wherein the second stage consists essentially of roll spinning the outer surface of the radially outer wall (15).

2. A method according to Claim 1, which comprises roll forming an axially outwardly facing shoulder seat (31) on the distal edge of one of said axially extending walls (15), and securing an edge of a closure (13) hermetically to said shoulder seat (31).

3. A method according to Claim 2, which comprises providing said housing (10) with a central hub flange (18), engaging said closure (13) against said hub flange (18), and permanently hermetically securing (40) said closure to said hub flange (18).

4. A method according to Claim 1, wherein an annular radius corner joining said base wall (14) to said radially inner wall (17) is work hardened during the first stage; and
a second annular radius corner between said base wall (14) and the radially outer wall (15) is work hardened during the second stage.

5. A method of making a viscous torsional vibration damper of the kind operating on the shear film principle and having an annular channel shaped housing (10) providing an annular working chamber (11) within which is mounted an annular complementary inertia mass ring (12) and a viscous damping fluid substantially filling shear film spaces between working surfaces of the inertia ring (12) and confronting working surfaces of the housing within said chamber, comprising roll (23) spinning a metal blank (B) into a generally channel shaped housing shell (11) and by said roll spinning providing an axially facing base wall (14) and spaced generally axially extending radially inner and radially outer walls (17, 15) and which walls provide said housing working surfaces;
characterized in that said roll spinning is carried out in two stages, wherein the first stage comprises attaching the blank (B) to a spinning machine mandrel, the spinning machine mandrel having an annular ledge with sides (22d, 22e) approximately equal to the radial length of said axially facing base wall (14) and said axially extending radially inner wall (17), and said first stage comprises roll spinning the inner working surface of the base wall (14) and the inner working surface of the radial inner wall (17), and conforming the base wall 14 and the radially inner wall (17) to the shape of the annular ledge (22d, 22e); and said second stage comprises applying the blank (B) to a second mandrel (27) having an annular forming backup rib (28) of a cross section corresponding to the distance between the axially extending radial inner and radial outer walls (17, 15), and thereafter roll spinning the outer surface of the radial outer wall 15 against the second mandrel (27).

6. A method according to claim 5, wherein during the first stage, a work hardened burnished finish is applied during roll spinning of the inner working surface of the base wall (14) and the inner working surface of the radially inner wall (17).

7. A method according to claim 6, wherein an annular radius corner joining said base wall (14) to said radially inner wall (17) is work hardened during the first stage; and
a second annular radius corner between said base wall (14) and the radially outer wall (15) is work hardened during the second stage.

8. A viscous torsional vibration damper of the kind operating on the shear film principle and having an annular channel shaped housing (10) providing an annular working chamber (11) within which is mounted an annular complementary inertia mass ring (12) and a viscous damping fluid substantially filling shear film spaces between working surfaces of the inertia ring and confronting working surfaces of the housing within said chamber; said housing (10) comprising a roll spun generally channel shaped annular shell having an axially facing base wall (14) and spaced axially extending radially inner and radially outer walls (17, 15) and which walls provide said housing working surfaces; annular radius corners joining said walls; characterized in that the outer surface only of the radially outer housing wall (15) is roll spun and in that the inner working surfaces only of said base wall (14) and of said radially inner wall (17) are roll spun and thereby have a spinning roll work hardened burnished finish.

9. A damper according to Claim 8, wherein said housing (10) comprises about 0.03% aluminum in aluminum killed steel.

10. A damper according to Claim 8, wherein one of said axially extending walls (15) has a roll-formed rabbet comprising a seat (31) engaged by an axial face at an edge of a closure (13), and means (38) hermetically sealing said closure edge in said rabbet.

11. A damper according to Claim 10, wherein said closure edge is welded by a circular weld (38) to a rim flange (33) defining said rabbet, and thereby providing said sealing.

12. A damper according to Claim 8, wherein said housing (10) has a hub flange (18) connected to said radially inner wall (17) engaged in face-to-face relation by a closure (13) having annular series of matching spaced bolt holes (19, 37), and means (40) hermetically sealing said closure to said hub flange adjacent to said bolt holes (19, 37).

13. A damper according to Claim 12, wherein said means (40) hermetically sealing the interfaces of said hub flange and said closure comprises annular welding.

## Patentansprüche

1. Verfahren zur Herstellung eines viskosen Torsionsschwingungsdämpfers von der Art, die nach dem Scherfilmprinzip arbeitet und ein ringförmiges, als Kanal ausgebildetes Gehäuse (10) aufweist, das eine ringförmige Arbeitskammer (11) vorsieht, in der ein ringförmiger komplementärer Massenträgheitsring (12) eingesetzt ist, und ein viskoses Dämpfungsfluid den Scherfilmzwischenraum zwischen den Arbeitsflächen des Trägheitsringes (12) und den gegenüberliegenden Arbeitsflächen des Gehäuses innerhalb der Kammer im wesentlichen ausfüllt, umfassend eine Walze (23), die einen Metallrohling (B) in einen im wesentlichen kanalförmigen Gehäusemantel (11) druckformt und durch diese Walzdruckformung eine in Axialrichtung blickende Grundwand (14) sowie beabstandete, sich im wesentlichen in Axialrichtung erstreckende, radial innere und radial äußere Wände (17, 15) geschaffen werden; wobei diese Wände die Gehäusearbeitsflächen vorsehen/bilden; dadurch gekennzeichnet, daß die Walzdruckformung in zwei Stufen ausgeführt wird, wobei die erste Stufe im wesentlichen besteht aus dem Walzdruckformen der inneren Arbeitsfläche der Grundwand (14) und der inneren Arbeitsfläche der radial inneren Wand (17) und dadurch eine kaltverfestigte, polierte Oberfläche darauf ausbildet, und wobei die zweite Stufe im wesentlichen aus dem Walzdruckformen der äußeren Seitenfläche der radial äußeren Wand (15) besteht.

2. Verfahren nach Anspruch 1, umfassend eine Walzdruckformung eines in Axialrichtung nach außen blickenden Schultersitzes (31) an der vorderen Kante von einer der sich in Axialrichtung erstreckenden Wände (15) sowie das vollständig dichte Befestigen einer Kante eines Deckels (13) an diesem Schultersitz (31).

3. Verfahren nach Anspruch 2, umfassend das Versehen des Gehäuses (10) mit einem mittigen Nabenflansch (18), das Eingreifen/Verbinden des Deckels (13) mit dem Nabenflansch (18) und das permanente, vollständig dichte Befestigen (14) des Deckels an dem Nabenflansch (18).

4. Verfahren nach Anspruch 1, bei dem eine ringförmige Ecke mit einem Radius, welche die Grundwand (14) mit der radial inneren Wand (17) verbindet, während der ersten Stufe kaltverfestigt wird; und eine zweite ringförmige Ecke mit einem Radius zwischen der Grundwand (14) und der radial äußeren Wand (15) während der zweiten Stufe kaltverfestigt wird.

5. Verfahren zur Herstellung eines viskosen Torsionsschwingungsdämpfers von der Art, die nach dem Scherfilmprinzip arbeitet und ein ringförmiges, als Kanal ausgebildetes Gehäuse (10) aufweist, das eine ringförmige Arbeitskammer (11) vorsieht, in der ein ringförmiger komplementärer Massenträgheitsring (12) eingesetzt ist, und ein viskoses Dämpfungsfluid den Scherfilmzwischenraum zwischen den Arbeitsflächen des Trägheitsringes (12) und den gegenüberliegenden Arbeitsflächen des Gehäuses innerhalb der Kammer im wesentlichen ausfüllt, umfassend eine Walze (23), die einen Metallrohling (B) in einen im wesentlichen kanalförmigen Gehäusemantel (11) druckformt und durch diese Walzdruckformung eine in Axialrichtung blickende Grundwand (14) sowie beabstandete, sich im wesentlichen in Axialrichtung erstreckende, radial innere und radial äußere Wände (17, 15) schafft, wobei diese Wände die Gehäusearbeitsflächen vorsehen; dadurch gekennzeichnet, daß das Walzdruckformen in zwei Stufen ausgeführt wird, wobei die erste Stufe umfaßt das Befestigen des Rohlings (B) an einem Druckformmaschinendorn, wobei der Druckformmaschinendorn einen ringförmigen Absatz mit Seiten (22d, 22e) aufweist, die annähernd gleich der radialen Länge der in Axialrichtung blickenden Grundwand (14) und der sich in Axialrichtung erstreckenden radial inneren Wand (17) sind, und die erste Stufe das Walzdruckformen der inneren Arbeitsfläche der Grundwand (14) und der inneren Arbeitsfläche der radial inneren Wand (17) sowie das Anpassen der Grundwand (14) und der radial inneren Wand (17) an die Form des ringförmigen Ansatzes (22d, 22e) umfaßt; und die zweite Stufe umfaßt das Aufbringen des Rohlings (B) an einem zweiten Dorn (27) der eine ringförmig ausgebildete Anpreßrippe (28) von einem Querschnitt aufweist, der dem Abstand zwischen der sich in Axialrichtung erstreckenden, radial inneren und radial äußeren Wände (17, 15) entspricht, und nachfolgend das Walzdruckformen der äußeren Seitenfläche der radial äußeren Wand (15) gegenüber dem zweiten Dorn (27).

6. Verfahren nach Anspruch 5, bei dem während der ersten Stufe eine kaltverfestigte, polierte Oberfläche während des Walzdruckformens von der inneren Arbeitsfläche der Grundwand (14) und der inneren Arbeitsfläche der radial inneren Wand (17) aufgebracht wird.

7. Verfahren nach Anspruch 6, bei dem eine ringförmige Ecke mit Radius, welche die Grundwand (14) mit der radial inneren Wand (17) verbindet, während der ersten Stufe kaltverfestigt wird; und eine zweite ringförmige Ecke mit Radius zwischen der Grundwand (14) und der radial äußeren Wand (15) während der zweiten Stufe kaltverfestigt wird.

8. Viskoser Torsionsschwingungsdämpfer von der Art, die nach dem Scherfilmprinzip arbeitet und ein ringförmiges, als Kanal ausgebildetes Gehäuse (10) aufweist, das eine ringförmige Arbeitskammer (11) vorsieht, in der ein komplementärer, ringförmiger Massenträgheitsring (12) eingesetzt ist, und ein viskoses Dämpfungsfluid den Scherfilmzwischenraum zwischen den Arbeitsflächen des Massenträgheitsringes und der gegenüberliegenden Arbeitsflächen des Gehäuses in der Kammer im wesentlichen ausfüllt, wobei das Gehäuse (10) umfaßt einen walzdruckgeformten, im wesentlichen als Kanal ausgebildeten, ringförmigen Mantel, der eine in Axialrichtung weisende/blickende Grundwand (14) und beabstandete, sich in Axialrichtung erstreckende radial innere und radial äußere Wände (14, 15) aufweist, wobei diese Wände die Gehäusearbeitsflächen schaffen; ringförmige Ecken mit Radius, welche die Wände verbinden; dadurch gekennzeichnet, daß die äußere Fläche lediglich von der radial äußeren Gehäusewand (15) walzdruckgeformt ist, und daß die inneren Arbeitsflächen lediglich von der Grundwand (14) und der radial inneren Wand (17) walzdruckgeformt sind und dadurch eine walzdruckgeformte, kaltverfestigte, polierte Oberfläche aufweisen.

9. Dämpfer nach Anspruch 8, bei dem das Gehäuse (10) aus etwa 0,03 % Aluminium in aluminiumberuhigtem Stahl besteht.

10. Dämpfer nach Anspruch 8, bei dem eine der sich in Axialrichtung erstreckenden Wände (15) eine walzdruckgeformte Falz aufweist, die aus einem Sitz (31) besteht, der von einer in Axialrichtung blickenden Seite an einer Kante eines Deckels (13) in Eingriff genommen wird, wobei Mittel (38) die Kante in der Falz hermetisch bzw. vollständig dicht abdichten.

11. Dämpfer nach Anspruch 10, bei dem die Deckelkante mittels eines kreisförmigen Schweißung (38) an einen Randflansch (33), der die Falz bildet, geschweißt wird und dadurch die Dichtung schafft.

12. Dämpfer nach Anspruch 8, bei dem das Gehäuse (10) einen Nabenflansch (18) aufweist, der mit der radial inneren Wand (17) verbunden ist, und der Seite-an-Seite mit einem Deckel (13) in Eingriff steht, welcher eine ringförmige Reihe von passend beabstandeten Schraubenlöchern (19, 37) aufweist, und Mittel (40) den Deckel an dem Nabenflansch angrenzend an die Schraubenlöcher (19, 37) hermetisch abdichten.

13. Dämpfer nach Anspruch 12, bei dem die die Grenzflächen von dem Nabenflansch und dem Deckel hermetisch abdichtenden Mittel (40) aus ringförmigen Schweißungen bestehen.

## Revendications

1. Procédé de fabrication d'un amortisseur visqueux de vibrations de torsion du type fonctionnant sur le principe d'une pellicule de cisaillement et présentant un boîtier (10) en forme de canal annulaire fournissant un compartiment de travail (11) annulaire à l'intérieur duquel est montée une couronne annulaire (12) de masse d'inertie complémentaire et un fluide d'amortissement visqueux remplissant sensiblement l'espace de pellicule de cisaillement entre les surfaces de travail de la couronne d'inertie (12) et mettant en présence des surfaces de travail du boîtier à l'intérieur dudit compartiment de travail, comprenant un polissage au rouleau (23) d'une ébauche métallique (B) dans un boîtier coquille (11) en forme générale de canal et ledit polissage au rouleau fournissant une paroi de fond (14) faisant face suivant une direction axiale et des parois (17, 15) extérieure suivant une direction radiale et intérieure suivant une direction radiale s'étendant suivant une direction axiale et généralement espacées lesquelles parois fournissant lesdites surfaces de travail du boîtier ;
caractérisé en ce que ledit polissage au rouleau est effectué en deux étapes, dont la première étape consiste essentiellement à polir au rouleau la surface de travail intérieure de la paroi du fond (14) et la surface de travail intérieure de la paroi (17) intérieure selon une direction radiale, et ainsi à former un fini poli écroui, et dont la seconde étape consiste essentiellement à polir au rouleau la surface extérieure de la paroi (15) extérieure selon une direction radiale.

2. Procédé selon la revendication 1, comprenant un laminage d'un logement à embase (31) faisant face à l'extérieur selon une direction axiale sur le bord distal de l'une desdites parois (15) s'étendant selon une direction axiale, et fixant de manière hermétique un bord d'un dispositif de fermeture (13) sur ledit logement à embase (31).

3. Procédé selon la revendication 2, comprenant la disposition sur ledit boîtier (10) d'un moyeu-flasque (18) qui enclenche ledit dispositif de fermeture (13) contre ledit moyeu-flasque (18), et fixe de manière hermétique et permanente (40) ledit dispositif de fermeture sur ledit moyeu-flasque (18).

4. Procédé selon la revendication 1, dans lequel un coin à rayon annulaire joignant ladite paroi du fond (14) et ladite paroi (17) intérieure selon une direction radiale est écroui au cours de la première étape ; et
un second coin à rayon annulaire entre ladite paroi du fond (14) et la paroi (15) extérieure selon une direction radiale est écroui au cours de la seconde étape.

5. Procédé de fabrication d'un amortisseur visqueux de vibrations de torsion du type fonctionnant suivant le principe d'une pellicule de cisaillement et présentant un boîtier (10) en forme de canal annulaire fournissant un compartiment de travail (11) annulaire à l'intérieur duquel est monté(e) une couronne annulaire (12) de masse d'inertie complémentaire et un fluide d'amorti visqueux remplissant sensiblement l'espace de pellicule de cisaillement entre les surfaces de travail de la couronne d'inertie (12) et mettant en présence des surfaces de travail du boîtier à l'intérieur dudit compartiment de travail, comprenant un polissage au rouleau (23) d'une ébauche métallique (B) dans un boîtier coquille (11) généralement en forme de canal et ledit polissage au rouleau fournissant une paroi de fond (14) faisant face suivant une direction axiale et des parois (17, 15) extérieure suivant une direction radiale et intérieure suivant une direction radiale s'étendant suivant une direction axiale et généralement espacées, lesquelles parois fournissant lesdites surfaces de travail du boîtier ;
caractérisé en ce que ledit polissage au rouleau est effectué en deux étapes, dont la première étape comprend la fixation de l'ébauche (B) sur un mandrin de machine à polir, le mandrin de la machine à polir présentant une corniche annulaire ayant des côtés (22d, 22e) approximativement égaux à la longueur radiale de ladite paroi de fond (14) faisant face selon une direction axiale et de ladite paroi (17) intérieure selon une direction radiale s'étendant selon une direction axiale, et en ce que ladite première étape comprend le polissage au rouleau de la surface de travail intérieure de la paroi de fond (14) et de la surface de travail intérieure de la paroi intérieure radiale (17), et mettant la paroi de fond (14) et la paroi (17) intérieure selon une direction radiale en conformité avec la forme de la corniche annulaire (22d, 22e) ; et en ce que ladite seconde étape comprend l'application de l'ébauche (B) sur un second mandrin (27) présentant une nervure d'appui formant anneau (28) d'une section transversale correspondant à la distance séparant les parois (17, 15) extérieure radiale et intérieure radiale s'étendant selon une direction axiale, puis le polissage au rouleau de la surface extérieure de la paroi extérieure radiale (15) contre le second mandrin (27).

6. Procédé selon la revendication 5, dans lequel, au cours de la première étape, un fini poli écroui est appliqué pendant le polissage au rouleau de la surface de travail intérieure de la paroi du fond (14) et la surface de travail intérieure de la paroi (17) intérieure selon une direction radiale.

7. Procédé selon la revendication 6, dans lequel un coin à rayon annulaire joignant ladite paroi de fond (14) à ladite paroi (17) intérieure selon une direction radiale est écroui au cours de la seconde étape et un second coin à rayon annulaire entre ladite paroi de fond (14) et la paroi extérieure (15) suivant une direction radiale est écroui au cours de la seconde étape.

8. Amortisseur visqueux de vibrations de torsion du type fonctionnant suivant le principe d'une pellicule de cisaillement et présentant un boîtier en forme de canal annulaire (10) fournissant un compartiment de travail (11) à l'intérieur duquel est montée une couronne annulaire (12) de masse d'inertie complémentaire et un fluide d'amortissement visqueux remplissant sensiblement l'espace de pellicule de cisaillement entre les surfaces de travail de la couronne d'inertie et mettant en présence des surfaces de travail du boîtier à l'intérieur dudit compartiment de travail ; ledit boîtier (10) comprenant une coquille annulaire généralement en forme de canal et polie au rouleau, présentant une paroi de fond (14) faisant face suivant une direction axiale et des parois (17, 15) extérieure suivant une direction radiale et intérieure suivant une direction radiale s'étendant suivant une direction axiale et généralement espacées, lesquelles parois fournissent lesdites surfaces de travail du boîtier ; des coins à rayon annulaire joignant lesdites parois ; caractérisé en ce que seule la surface extérieure de la paroi (15) de boîtier extérieure selon une direction radiale est polie au rouleau et en ce que seules les surfaces de travail intérieures de la paroi du fond (14) et de ladite paroi intérieure selon une direction radiale (17) sont polies au rouleau, et ainsi présentent un fini poli écroui.

9. Amortisseur selon la revendication 8, dans lequel ledit boîtier (10) comprend environ 0,03 % d'aluminium dans de l'acier calmé à l'aluminium.

10. Amortisseur selon la revendication 8, dans lequel l'une desdites parois (15) s'étendant selon une direction axiale présente une feuillure en forme de rouleau comprenant un siège (31) engagé par une face axiale sur un bord du dispositif de fermeture (13), et un moyen (38) fermant hermétiquement ledit bord du dispositif de fermeture sur ladite feuillure.

11. Amortisseur selon la revendication 10, dans lequel ledit bord du dispositif de fermeture est soudé par une soudure circulaire (38) sur une joue de jante (33) définissant ladite feuillure, fournissant ainsi ladite fermeture hermétique.

12. Amortisseur selon la revendication 8, dans lequel ledit boîtier (10) présente un moyeu-flasque (18) raccordé à ladite paroi (17) intérieure selon une direction radiale engagée dans une relation face-à-face par un dispositif de fermeture (13) présentant une série annulaire de trous de boulons (19, 37) espacés et appariés, et un moyen (40) fermant hermétiquement ledit dispositif de fermeture sur ladite joue de jante adjacente auxdits trous de boulons (19, 37).

13. Amortisseur selon la revendication 12, dans lequel ledit moyen (40) fermant hermétiquement les interfaces de ladite joue de jante et ledit dispositif de fermeture présentent une soudure annulaire.
